# EUROPÄISCHE PATENTSCHRIFT

(11) **EP 3 647 039 B1**
(45) Veröffentlichungstag und Bekanntmachung des Hinweises auf die Patenterteilung: **06.08.2025**
(21) Anmeldenummer: 19205861.8
(22) Anmeldetag: 29.10.2019
(51) Int. Cl.: B29D 99/00, B29C 70/42, B29C 70/78, B29C 70/16

(54) **VERFAHREN ZUM HERSTELLEN EINES BEREICHSWEISE FLÄCHIGEN BAUTEILS AUS EINEM FASERVERBUNDWERKSTOFF**
METHOD FOR PRODUCING A COMPONENT MADE OF FIBRE COMPOSITE MATERIAL
PROCÉDÉ DE FABRICATION D'UN COMPOSANT PLAN PAR ENDROITS D'UN MATÉRIAU COMPOSITE FIBREUX

(30) Priorität: 29.10.2018 DE 102018126910; 30.10.2018 DE 102018009379
(43) Veröffentlichungstag der Anmeldung: 06.05.2020
(73) Patentinhaber: Airbus Operations GmbH, 21129 Hamburg (DE)
(72) Erfinder: Heltsch, Norbert, 21129 Hamburg (DE); Jörn, Paul, 21129 Hamburg (DE)
(74) Vertreter: LKGLOBAL Lorenz & Kopf Patentanwalt Attorney at Law PartG mbB

(56) Entgegenhaltungen:
- EP-A1- 1 263 572
- EP-A1- 1 899 149
- EP-A1- 2 821 340
- EP-A2- 2 234 793
- FR-A1- 3 061 070
- US-A1- 2016 207 607

## Beschreibung

### TECHNISCHES GEBIET

Die Erfindung betrifft ein Verfahren zum Herstellen eines Bauteils sowie ein solches Bauteil.

### HINTERGRUND DER ERFINDUNG

Für die Herstellung von Bauteilen aus faserverstärkten Kunststoffen haben sich viele unterschiedliche Verfahren etabliert. Üblicherweise werden bei der Herstellung großformatiger Bauteile, beispielsweise von Rumpfschalen für Verkehrsflugzeuge, Formwerkzeuge eingesetzt, auf die ein Fasergelege gebracht und ausgehärtet wird. Das Fasergelege kann durch automatisierte Vorrichtungen generiert werden. Hierbei werden nach und nach einzelne Faserbahnen oder Fasermatten aufgelegt, so dass sehr leicht individuelle Dicken- und Faserverläufe realisierbar sind. Das auf das Formwerkzeug aufgebrachte Gelege wird einem Druck und oftmals einer Erwärmung ausgesetzt, so dass eine Aushärtung des die Fasern umgebenden Matrixmaterials erfolgt und dadurch ein starres Bauteil hergestellt ist.

Neben der Verwendung wärmehärtbaren Harzes als Matrixmaterial sind auch thermoplastische Matrixmaterialien bekannt. Hierzu können ähnliche Verfahren und Prozesse eingesetzt werden.

Durch die individuellen Faser- und Dickenverläufe ist das Generieren von Fasergelegen zur Herstellung eines großformatigen Bauteils sehr aufwändig und zeitintensiv. Desweiteren werden hohe Anforderungen an automatisierte Vorrichtungen zum Ablegen von Fasern gestellt, die mit größer werdenden Bauteildimensionen ansteigen. Herstellverfahren zum Bereitstellen von Bauteilen aus Faserverbundwerkstoffen mit höherer Geschwindigkeit sind zwar bekannt, doch sind diese ausschließlich in der Lage, Bauteile mit konstanter Dicke bereitzustellen.

EP 1 899 149 A1 beschreibt ein Verfahren zur Fertigung eines schalenförmigen Bauteils aus kohlefaserverstärktem Kunststoff mit lokalen Verstärkungszonen und Steifelementen wie Rumpf- oder Flügelschalen von Flugzeugen. Es beinhaltet die Anordnung gehärteter Doppelgänger auf einer teilweise ausgehärteten Schalenhülle, das Aufbringen gehärteter Steifelemente und die Platzierung von teilweise ausgehärteten Winkelhaltern gegen die Steifelemente. Nach dem Aushärten entsteht so das Bauteil, das Verstärkungszonen und Steifelemente aufweist.

### ZUSAMMENFASSUNG DER ERFINDUNG

Der Umfang des Schutzbereichs wird durch die Gegenstände der Hauptansprüche bestimmt. Weiterbildungen sind den Unteransprüchen zu entnehmen. Die Erfindung ist in Anspruch 1 und Anspruch 8 definiert.

Aufgabe der Erfindung ist es, ein Herstellverfahren zum Bereitstellen von Bauteilen aus Faserverbundwerkstoffen mit höherer Geschwindigkeit und variabler Dicke bereitzustellen.

Es ist eine Aufgabe der Erfindung, ein Verfahren zum Herstellen eines großformatigen Bauteils vorzuschlagen, bei dem trotz lokal unterschiedlicher Bauteildicken möglichst kontinuierliche Herstellprozesse einsetzbar sind, die mit hoher Geschwindigkeit und Qualität Bauteile aus einem Faserverbundwerkstoff bereitstellen können.

Die Aufgabe wird durch ein Verfahren zum Herstellen eines Bauteils nach Anspruch 1 gelöst. Vorteilhafte Weiterbildungen und Ausführungsformen sind den Unteransprüchen und der nachfolgenden Beschreibung zu entnehmen.

Es wird ein Verfahren nach Anspruch 1 zum Herstellen eines Bauteils vorgeschlagen.

Das erste flächige Gelege weist folglich eine einzige Dicke auf, die durchgehend gleichbleibend ist. Gleichzeitig bestimmt das erste flächige Gelege auch die Flächenerstreckung des durch das erfindungsgemäße Verfahren herzustellende Bauteil. Das erste flächige Gelege ist folglich als eine Art Basis zu verstehen, die insbesondere bei der Herstellung einer Rumpfschale eines Flugzeugs eine glatte Außenhaut bereitstellt.

Die Herstellung eines solchen ersten flächigen Geleges kann aufgrund der einfachen Geometrie mit einem Herstellungsprozess realisiert werden, der besonders effizient, schnell und kostengünstig durchführbar ist. Es bietet sich beispielsweise die Verwendung eines auf einer Doppelbandpresse basierenden Verfahrens an, bei dem eine Tränkung bzw. Harzimprägnierung und Konsolidierung in einem einzelnen Arbeitsschritt erfolgen.

Alternativ dazu kann das Ablegen von vorimprägnierten Faserbändern in einem automatisierten Prozess, beispielsweise mittels "AFP" ("Automated Fiber Positioning"), erfolgen. Die einzelnen mit Harz versehenen Faserbänder könnten mithilfe von Ultraschall, durch Einwirkung eines Lasers oder durch punktuelle Erwärmung aneinandergeheftet werden, um einen geschlossenen Verbund herzustellen.

Als weitere Alternative könnte ein automatisierter Faserpositionierungsprozess ("AFP", "Automated Fiber Positioning") erfolgen. Auch dort könnten einzelne, vorimprägniert Fasern mittels Ultraschall aneinandergeheftet werden.

Zur lokalen Beeinflussung der Bauteildicke werden ein oder mehrere zweite flächige Gelege hergestellt. In diesem Zusammenhang ist zu beachten, dass das erste Gelege eine Mindestdicke des Bauteils bestimmt. Eine Reduktion einer Bauteildicke kann nicht durchgeführt werden, sondern lediglich eine Erhöhung der Bauteildicke durch das Anordnen der zweiten Gelege. Die Dicke des ersten Geleges entspricht folglich der geringsten lokalen Dicke des herzustellenden Bauteils.

Für die Herstellung der zweiten Gelege können dieselben Prozesse Verwendung finden, wie für das erste Gelege. Allerdings ist aufgrund der möglichen Vielzahl von Varianten der zweiten Gelege denkbar, dass eine Doppelbandpresse nicht unbedingt zu bevorzugen ist. Folglich können eher automatisierte Ablegeverfahren eingesetzt werden, mit denen sehr individuelle, kleinformatige zweite Gelege herstellbar sind. Ein Konsolidieren bzw. Aushärten ist nicht zwangsläufig erforderlich. Vielmehr können auch dort einzelne Elemente mittels Ultraschall zusammengeheftet werden.

Zum Herstellen des Bauteils werden die zweiten Gelege an solchen Bereichen der Innenseite des ersten Geleges positioniert, an denen die lokale Dicke beispielsweise aufgrund von vorgesehenen strukturellen und mechanischen Lasten im Vergleich zur lokalen Mindestdicke vergrößert werden muss. Zum Zusammensetzen der einzelnen Gelege wird insbesondere ein Formwerkzeug eingesetzt, welches diese Komponenten aufnehmen kann.

Die Formwerkzeuge, die hierzu infrage kommen, können auf unterschiedliche Weise realisiert sein. Zum einen sind Formwerkzeuge mit einer Werkzeugoberfläche denkbar, die das erste Gelege mit seiner Außenseite aufnehmen. Alle anderen Komponenten werden auf einer von der Werkzeugoberfläche abgewandten Seite des Formwerkzeugs angeordnet. Andere Formwerkzeuge können indes eine Werkzeugoberfläche oder dergleichen aufweisen, die beispielsweise auch die nachfolgend erwähnten Versteifungsbauteile direkt aufnimmt, auf welche dann die zweiten Gelege und das erste Gelege angeordnet werden. Hierauf wird bezüglich weiter nachfolgenden Ausführungsformen näher eingegangen.

Schließlich wird der Verbund aus dem ersten Gelege und den zweiten Gelegen zumindest unter Anwendung von Druck konsolidiert. Dies bedeutet, dass der Verbund zwischen das Formwerkzeug und eine weitere Einrichtung gebracht wird und insbesondere pressend eine Konsolidierung erreicht wird. Dies wird insbesondere von einer Erwärmung begleitet. Sowohl bei einem thermoplastischen Matrixmaterial als auch bei einem wärmehärtbaren Harz führt dies schließlich zu einem konsolidierten Bauteil.

Der besondere Vorteil des erfindungsgemäßen Verfahrens liegt darin, dass ein sehr großes Basisteil in einem separaten, sehr effizienten und rasch durchführbaren Verfahren hergestellt werden kann, wonach individuellere, zur Erhöhung der Dicke verwendete zusätzliche zweite Gelege in automatisierten Verfahren in deutlich kleinerem Format herstellbar und anbringbar sind. Insgesamt wird der Herstellungsprozess des Bauteils deutlich vereinfacht, denn es sind keine sehr großformatigen Faserablegevorrichtungen notwendig, die aufgrund der Größe der herzustellenden Bauteile sehr kostenintensiv sind, wenn eine hohe Präzision auch über große Bauteildimensionen gefordert wird. Gleichermaßen erlaubt das erfindungsgemäße Verfahren, noch großformatiger Bauteile herzustellen als mit derzeit bekannten Verfahren. Es ist vorstellbar, dass Rumpfschalen oder Rumpfschalenhälften mit einer Länge von deutlich über 20 m mit einem solchen Verfahren herstellbar sind. Die Auslegung und Gestaltung derartiger Bauteile kann indes durch das erfindungsgemäße Verfahren beeinflusst werden, indem die Topologie des Faseraufbaus an eine Vereinfachung der Herstellung angepasst wird.

An dieser Stelle wird darauf hingewiesen, dass die einzelnen Gelege, also die ersten Gelege und/oder die zweiten Gelege, in sich bevorzugt einen symmetrischen Lagenaufbau aufweisen, so dass Verspannungen oder Verformungen vermieden werden.

In einer vorteilhaften Ausführungsform weist das mindestens eine erste flächige Gelege eine geradzahlige Anzahl erster flächiger Gelege auf.

Das mindestens eine erste Gelege und die zweiten Gelege werden bevorzugt aus einem thermoplastischen, faserverstärkten Kunststoff hergestellt. Das Matrixmaterial kann folglich ein Thermoplast sein, beispielsweise Polyamid, PEKK, PEEK oder PPS. Ein Vorteil bei der Verwendung eines Thermoplasts ist die Möglichkeit, durch Erwärmung und Druck das Matrixmaterial zumindest teilweise zu schmelzen, so dass die einzelnen Komponenten des Verbundes vor der Konsolidierung bereits eine gewisse Formstabilität aufweisen und sich anschließend materialschlüssig gut verbinden.

Das Verfahren weist ferner das Bereitstellen mehrerer Versteifungselemente und das Positionieren der Versteifungselemente auf der Innenseite des ersten Geleges vor dem Konsolidieren auf. Das Bereitstellen der Versteifungselemente kann das bloße Bereitstellen von zugekauften Versteifungselementen umfassen. Allerdings wäre ebenso denkbar, derartige Versteifungselemente durch einen Prozess zur Herstellung von Bauteilen aus einem Faserverbundwerkstoff herzustellen. Ziel ist, geeignete Versteifungselemente bereitzustellen, die materialschlüssig an der Innenseite des ersten flächigen Geleges angeordnet werden. Anschließend wird der Verbundes aus dem ersten Gelege, den zweiten Gelegen und den Versteifungselementen zumindest unter Anwendung von Druck konsolidiert.

Erfindungsgemäß umfasst das Herstellen des mindestens einen ersten Geleges das Herstellen einer geradzahligen Anzahl erster flächiger Gelege mit einem äußeren ersten Gelege und einem inneren ersten Gelege, wobei das Positionieren der zweiten Gelege das Einbringen zumindest eines Teils der zweiten Gelege zwischen das äußere erste Gelege und das innere erste Gelege umfasst. Beide ersten Gelege weisen eine Innenseite und eine Außenseite auf. Die Außenseite des inneren ersten Geleges weist zum äußeren ersten Gelege, während die Innenseite des äußeren ersten Geleges zu dem inneren ersten Gelege weist. Folglich bilden beide ersten flächigen Gelege die Basis des herzustellenden Bauteils, wobei ein Teil der zweiten Gelege von den beiden ersten Gelegen zur lokalen Verstärkung eingeschlossen wird. Die durch beide erste Gelege bestimmten Oberflächen sind sehr kontinuierlich und geschlossen, was die Festigkeit des Bauteils positiv beeinflusst. Bei dem Konsolidieren des Verbundes aus den genannten Komponenten ist darauf zu achten, dass eine Formtreue beispielsweise des äußeren ersten Geleges gewünscht ist, das etwa eine äußere Oberfläche einer Rumpfschale bildet.

Die vorangehend genannten Versteifungselemente werden vor dem Konsolidieren bevorzugt auf der Innenseite des inneren ersten Geleges positioniert.

Bevorzugt weisen das innere erste Gelege und das äußere erste Gelege einen Lagenaufbau auf, die zueinander symmetrisch sind. Besonders bevorzugt weisen die inneren Gelege und die äußeren Gelege einen Lagenaufbau auf, die zueinander symmetrisch sind. Hierdurch können in dem herzustellenden Bauteil Verspannungen bzw. Verformungen nach einer anfänglichen Konsolidierung vermieden werden. Insbesondere sollten beide ersten Gelege eine identische Dicke mit einer identischen Anzahl an Lagen sowie identischen Materialien aufweisen.

Eine vorteilhafte Ausführungsform weist ferner das Positionieren eines oder mehrerer der zweiten oder dritter Gelege an einer Innenseite des inneren ersten Geleges auf. Damit können weitere lokale Verstärkungen generiert werden. Da sich diese nicht zwischen zwei geschlossenen ersten Gelegen befinden, können deutlich stärkere Querschnittsänderungen erfolgen. Beispielsweise können 90°-Übergänge oder Flächensteigungen mit einem Verhältnis von 1:20 Verwendung finden, wo erforderlich. Derartige zweite Gelege würden zwischen zwei ersten Gelegen zu Verformungen, Verspannungen, Hohlräumen und damit unter Last zu Delamination führen, so dass derartige zweite Gelege insbesondere an der Innenseite eines inneren ersten Geleges anzuordnen sind. Die Größe derartiger zweiter Gelege könnte derart gewählt werden, dass automatisierte Faserablegeprozesse vermieden werden können und insbesondere Doppelbandpressen einsetzbar sind.

In einer weiter vorteilhaften Ausführungsform sind die an der Innenseite des inneren ersten Geleges angeordneten zweiten Gelege symmetrisch zu den zweiten Gelegen ausgebildet, die zwischen den beiden ersten Gelegen angeordnet sind. Dies bedeutet, dass die Lagen zueinander symmetrische Faserrichtungen aufweisen.

Das Herstellen des mindestens einen ersten Geleges kann bevorzugt mittels einer Doppelbandpresse durchgeführt werden. In einer solchen kann eine beliebige Länge eines Werkstücks hergestellt werden. Beispielsweise kann ein Fasermaterial mit einem Matrixmaterial beschichtet oder imprägniert und konsolidiert werden. Die Doppelbandpresse weist zwei zueinander parallel verlaufende Bänder auf, die einen gewünschten Druck auf ein durch die Vorrichtung verlaufendes Halbzeug ausüben. Wie vorangehend dargelegt können große, plattenförmige Bauteile aus einem Faserverbundmaterial mit einer konstanten Dicke hergestellt werden. Die Doppelbandpresse bietet sich insbesondere bei der Verwendung eines Faserverbundwerkstoffs mit einem thermoplastischen Matrixmaterial an.

Das Herstellen der zweiten Gelege kann zumindest teilweise mittels eines automatisierten Faserablegeprozesses durchgeführt wird. Damit können auch komplexere Außenkonturen der zweiten Gelege realisiert sein. Zudem kann es sich insbesondere bei kleineren Dimensionen des zweiten Geleges anbieten, solche Verfahren zur individuelleren Gestaltung einzusetzen.

Der Verbund könnte auf einem Formwerkzeug ausgebildet werden, wobei der Verbund anschließend zwischen dem Formwerkzeug und einem Andrückblock eingeschlossen wird, und wobei der Verbund durch Einwirkung eines mechanischen Drucks des Andrückblocks in Richtung des Formwerkzeugs konsolidiert wird. Der Andrückblock kann eine gewisse Flexibilität aufweisen, so dass beim Andrücken des Verbundes auf ein massives Formwerkzeug die Komponenten des Verbundes aufeinandergepresst werden. Bei der Verwendung zweier erster Gelege können in dem Verbund noch geringe, hohle Zwischenräume vorliegen, die durch Anpassen der Form insbesondere des inneren ersten Geleges beim Anpressen eliminiert werden.

Es ist vorstellbar, dass ein inneres erstes Gelege dreidimensional in seiner Form angepasst wird, bevor der Verbund auf dem Formwerkzeug ausgebildet wird. Gleiches gilt für die Versteifungsbauteile, die vor dem Positionieren auf eine gewünschte dreidimensionale Form gebracht werden könnten.

Dient das erfindungsgemäße Verfahren der Herstellung eines Teils eines Flugzeugrumpfes, beispielsweise eine Rumpfschale, könnte das Verfahren ferner das Einbetten einer Blitzschutzschicht aufweisen. Diese könnte als eine globale Lage mit einer gleichförmigen Dicke und einer Erstreckung über das gesamte Bauteil ausgeführt sein.

In einer vorteilhaften Ausführungsform kann das Konsolidieren mit einem Prozess durchgeführt werden, der aus einer Gruppe von Prozessen ausgewählt ist, die Gruppe aufweisend Presskonsolidierung, Vakuumkonsolidierung, und Autoklavkonsolidierung. Die Presskonsolidierung wurde vorangehend bereits erwähnt. Das Konsolidieren in einem Autoklaven führt zu einer gleichmäßigen Druckbeaufschlagung des Verbundes bei gleichzeitiger Erwärmung. Die Größe eines Autoklaven, in den der Verbund eingeschoben wird, muss allerdings hierzu angepasst sein. Alternativ dazu ist auch denkbar, den Verbund mit einer Vakuumfolie abzudecken und den Zwischenraum zwischen dem Formwerkzeug und der Vakuumfolie zu evakuieren. Dadurch wirkt der Umgebungsdruck, der das Formwerkzeug umgibt, zum Anpressen auf den Verbund. Dies könnte vergleichsweise einfach sein, wenn der Umgebungsdruck mechanisch ausreichend ist.

Bevorzugt ist es, wenn die ersten, zweiten und dritten Gelege aus einem thermoplastischen, faserverstärkten Kunststoff hergestellt werden.

Die Erfindung betrifft ferner ein Bauteil nach Anspruch 8.

Das Bauteil weist ferner mehrere Versteifungselemente auf, die auf der Innenseite des mindestens einen ersten Geleges angeordnet sind. Der Verbund aus dem mindestens einen ersten Gelege, den zweiten Gelegen und den Versteifungselementen ist dann zumindest unter Anwendung von Druck konsolidiert.

Ferner weist das Bauteil zwei erste Gelege auf und zumindest ein Teil der zweiten Gelege ist zwischen den ersten Gelegen angeordnet.

Weiterhin weist das Bauteil eine geradzahlige Anzahl erster flächiger Gelege aus einem Faserverbundwerkstoff mit einer konstanten Dicke, einer Außenseite und einer Innenseite auf, wobei das erste Gelege eine Flächenerstreckung aufweist, die die Flächenerstreckung des Bauteils bestimmt, mehrere zweite und dritte flächige Gelege aus dem Faserverbundwerkstoff, wobei die Flächenerstreckung der zweiten und dritten Gelege die der ersten flächigen Geleges unterschreiten, und mehrere Versteifungselemente, wobei die zweiten Gelege an solchen Bereichen der Innenseite des äußeren ersten Geleges und die dritten Gelege an solchen Bereichen der Innenseite des inneren ersten Geleges angeordnet sind, an denen eine lokale Dicke zur Erhöhung der lokalen Festigkeit erhöht werden muss, wobei die Versteifungselemente auf der Innenseite der ersten Gelege angeordnet sind, und wobei der Verbund aus den ersten Gelegen, den zweiten und dritten Gelegen und den Versteifungselementen zumindest unter Anwendung von Druck konsolidiert ist.

Erfindungsgemäß ist das Bauteil mit einem vorangehend genannten Verfahren hergestellt. Dieses Bauteil kann insbesondere eine Rumpfschale, eine Flügelschale, eine Leitwerksschale oder ein anderes flächiges Bauteil eines Flugzeugs sein.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt ein Verfahren in einer schematischen, blockbasierten Darstellung.
Fig. 2 zeigt einen Teilschnitt eines herzustellenden Bauteils.
Fig. 3 zeigt ein Flugzeug und eine Rumpfschale des Flugzeugs als herzustellendes Bauteil.
Fig. 4, 4A, 5 und 5A zeigen die Anwendung unterschiedlicher Formwerkzeuge.

### DETAILLIERTE DARSTELLUNG EXEMPLARISCHER AUSFÜHRUNGSFORMEN

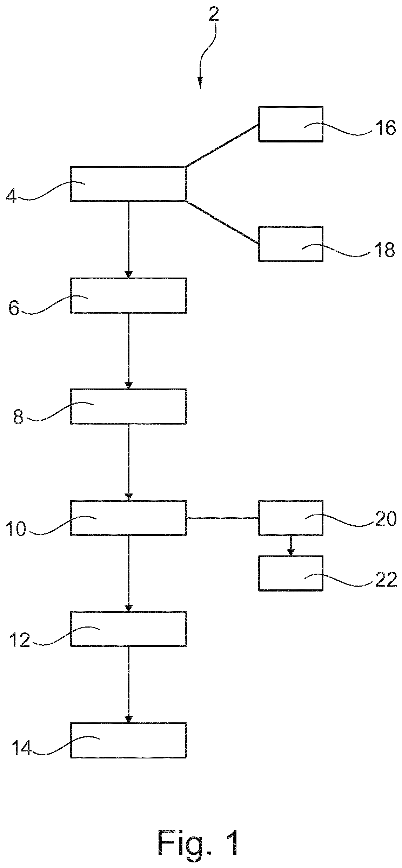

Fig. 1 zeigt ein erfindungsgemäßes Verfahren 2 zum Herstellen eines Bauteils in einer schematischen, blockbasierten Darstellung. Das Verfahren 2 beginnt exemplarisch mit der Herstellung 4 mindestens eines ersten flächigen Geleges aus einem Faserverbundwerkstoff mit einer konstanten Dicke, wobei das erste Gelege eine Flächenerstreckung aufweist, die die Flächenerstreckung des Bauteils bestimmt. Anschließend, gleichzeitig oder in einem vorhergehenden Schritt erfolgt das Herstellen 6 mehrerer zweiter flächiger Gelege aus dem Faserverbundwerkstoff, wobei die Flächenerstreckung der zweiten Gelege die des ersten flächigen Geleges unterschreiten. Anschließend, zeitgleich oder in einem vorhergehenden Schritt erfolgt das Bereitstellen 8 mehrerer Versteifungselemente.

Der Einfachheit halber werden diese drei Schritte 4, 6 und 8 als einander nachfolgende Schritte gekennzeichnet. Wie ausgeführt, können diese aber auch in einer anderen Reihenfolge vollzogen werden.

Sind diese Komponenten, also das mindestens eine erste flächige Gelege, die zweiten flächigen Gelege und die Versteifungselemente vorhanden, werden diese entsprechend positioniert, um einen Verbund von Komponenten auszubilden. Die zweiten Gelege werden an solchen Bereichen einer Innenseite des ersten Geleges positioniert 10, an denen eine lokale Dicke zur Erhöhung der lokalen Festigkeit erhöht werden muss.

Anschließend oder in einem vorhergehenden Schritt werden Versteifungselemente auf der Innenseite des ersten Geleges positioniert 12, wonach sich ein Konsolidieren 14 des Verbundes aus dem ersten Gelege, den zweiten Gelegen und den Versteifungselementen zumindest unter Anwendung von Druck anschließt. Die Verfahrensschritte 10 und 12 sind auch hier der Einfachheit halber als einander nachfolgende Schritte gekennzeichnet. Allerdings kann dies insbesondere von der Form des Formwerkzeug abhängen, in welcher Reihenfolge diese Schritte durchgeführt werden.

Das Herstellen 4 des mindestens einen ersten flächigen Geleges kann das Herstellen 16 eines äußeren ersten Geleges und das Herstellen 18 eines inneren ersten Geleges umfassen. Das Positionieren 10 der zweiten Gelege kann dann folglich das Einbringen 20 zumindest eines Teils der zweiten Gelege zwischen das äußere erste Gelege und das innere erste Gelege umfassen.

Zusätzlich können auch an der Innenseite des inneren ersten Geleges eines oder mehrere der zweiten Gelege positioniert werden 22, um eine weitere lokale Versteifung zu erreichen. Diese können auch mit stärkeren Formübergängen ausgestattet werden, als die zweiten Gelege, die zwischen den ersten Gelegen angeordnet sind.

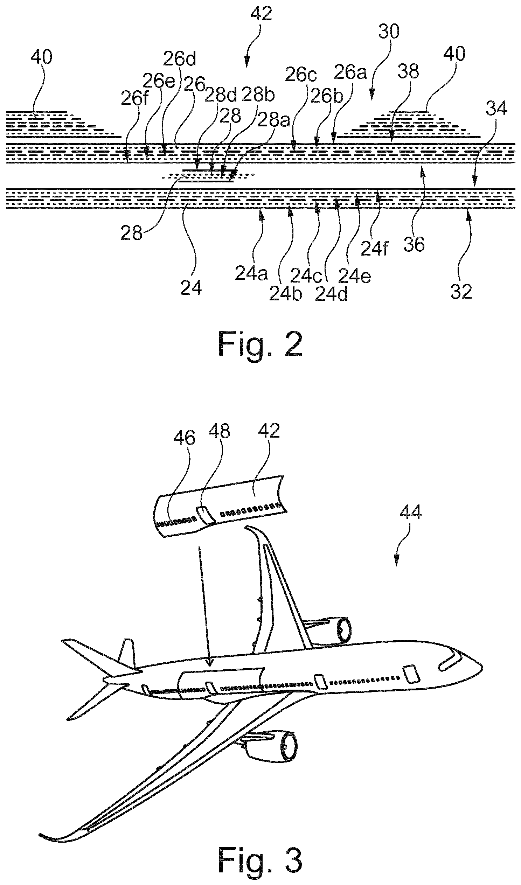

Fig. 2 zeigt einen exemplarischen Lagenaufbau eines herzustellenden Bauteils 42 in einem Teilschnitt. Hier wird in der Zeichnungsebene unten ein äußeres erstes Gelege 24 gezeigt, das mit einer Reihe von Lagen 24a, 24b, ..., 24f ausgestattet ist. In einem Abstand hierzu ist ein inneres erstes Gelege 26 vorgesehen, welches mehrere Lagen 26a, 26b, ..., 26f aufweist. Es ist vorgesehen, dass die Lagen 24a bis 24f und die Lagen 26a bis 26f symmetrisch zueinander sind. Dies bedeutet, dass die Faserrichtungen der einzelnen Lagen mit zunehmendem Abstand der ersten Gelegen 24 und 26 voneinander gleich sind.

Zwischen den beiden ersten Gelegen 24 und 26 ist ein zweites Gelege 28 angeordnet, das exemplarisch eine Reihe von Lagen 28a, 28b, 28c und 28d aufweist. Es ist bevorzugt, dass Flächenübergange in dem zweiten Gelege 28 sehr harmonisch verlaufen, so dass Flächensteigungen von höchstens 1:200 realisiert werden. Durch Aufpressen des inneren erstes Geleges 26 oder des äußeren ersten Geleges 24 wird das zweite Gelege 28 bündig eingeschlossen.

In diesem Zusammenhang sind die Seiten eines Verbundes 30 aus den gezeigten Gelegen wie folgt zu bezeichnen. Eine von dem inneren ersten Gelege 26 abgewandten Seite 32 des äußeren ersten Geleges 24 ist als Außenseite 32 zu bezeichnen. Die gegenüberliegende Seite ist die Innenseite 34. Eine zu dem äußeren ersten Gelege 24 gewandte Seite des inneren ersten Geleges 26 ist eine Außenseite 36, eine gegenüberliegende Seite eine Innenseite 38. An der Innenseite 38 des inneren ersten Geleges 26 ist exemplarisch eine Reihe weiterer zweiter Gelege 40 angeordnet, die eine zusätzliche Verstärkung des Bauteils hervorrufen. Bei diesen nicht eingeschlossenen zweiten Gelegen 40 können größere Flächensteigungen von beispielsweise bis zu 1:20 realisiert werden.

Es ist bevorzugt, dass die zweiten Gelege 40 an der Innenseite 38 des inneren ersten Geleges 26 symmetrisch zu den zweiten Gelegen 28 zwischen den ersten Gelegen 24 und 26 ausgebildet sind.

Als Beispiel für ein herzustellendes Bauteil 42 dient die Darstellung eines Flugzeugs 44 in Fig. 3. Das Bauteil 42 könnte eine Rumpfschale sein, die mehrere Fensterausschnitte 46 und einen Türausschnitt 48 aufweist. In Bereichen um die Fensterausschnitte 46 und den Türausschnitt 48 herum können lokale Aufdickungen vorliegen, die beispielsweise mit zweiten Gelegen 28 und 40 realisiert werden könnten. Durch die in Fig. 2 dargestellte Topologie ist es möglich, lokale Aufdickungen mithilfe von zweiten Gelegen 28 zu realisieren und dennoch großformatige Bauteile in effizienten und raschen Herstellprozessen als flächige Komponenten mit einer gleichförmigen Dicke bereitzustellen.

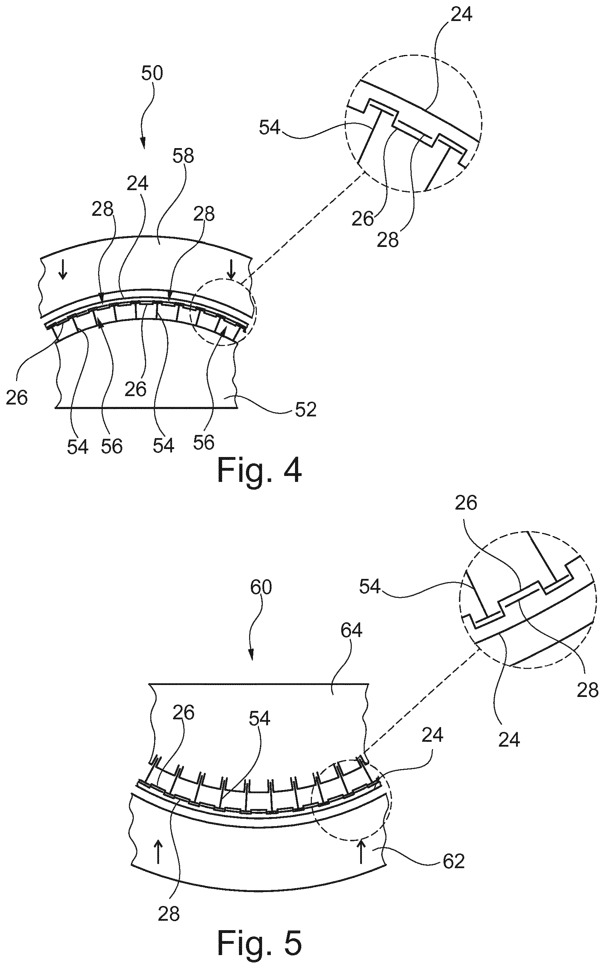

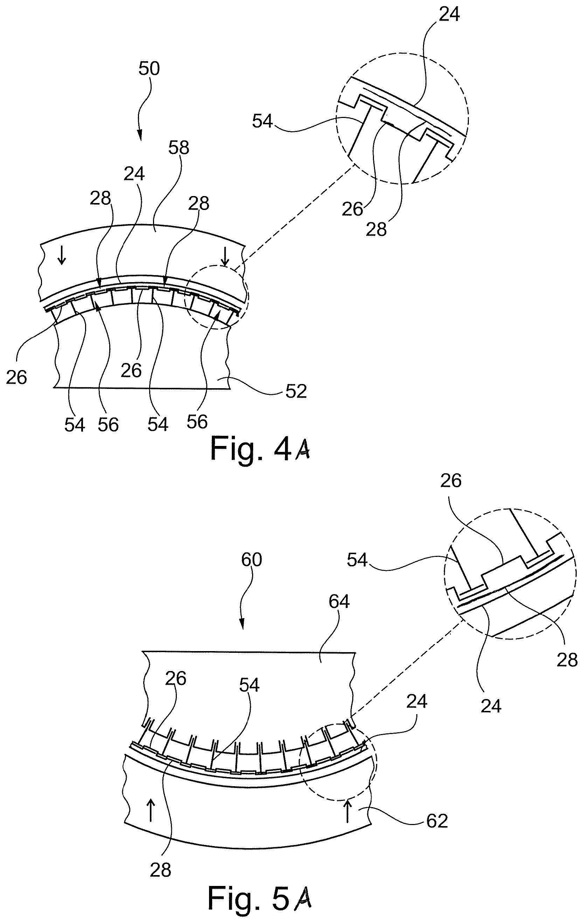

Fig. 4 und 4A zeigen eine erste Variante eines Formwerkzeugs 50, das eine starre Basis 52 aufweist, auf der zunächst Versteifungselemente 54 in Form von Stringern angeordnet werden. Diese sind später zu einer Innenseite des Bauteils 42 gerichtet. Auf die Stringer 54 wird das innere erste Gelege 26 positioniert, das in einigen Teilbereichen 56 in seiner Kontur dreidimensional angepasst ist. Dadurch ist es möglich, die eingeschlossenen zweiten Gelege 28 zwischen den Stringern 54 oder sowohl unter, als auch zwischen den Stringern 54 anzuordnen, so dass diese lokal zu einer Aufdickung führen.

Anschließend wird das äußere erste Gelege 24 angeordnet. Durch die vorherige Anpassung der Kontur des inneren ersten Geleges 26 verbleibt die Außenseite 32 des äußeren ersten Geleges 24 in seiner geplanten Form. Die Außenseite 32, welche beispielsweise eine Außenfläche der Rumpfschale 42 darstellt, kann dadurch bündig auf die anderen Komponenten aufgelegt werden. Durch das anschließende Aufdrücken des äußeren ersten Geleges 24 mittels eines Andruckblocks 58 kann eine Konsolidierung durchgeführt werden, ohne dass das äußere erste Gelege 24 seine Form verändert. Die eingeschlossenen zweiten Gelege 28 können ebenso mit einer endgültigen, dreidimensionalen Kontur vorgesehen sein oder sie werden weitgehend flach aufgelegt und durch das Aufdrücken des Andruckblocks 58 erst in ihre vorgesehene Form gebracht.

Die Darstellungen in Fig. 4 und 4A sind lediglich exemplarisch zu verstehen, es sind auch weitere Gelege möglich und zusätzlich könnte auch eine Blitzschutzschicht (nicht gezeigt) integriert werden. Ferner könnte statt eines Andruckblocks 58 auch eine Vakuumfolie aufgebracht werden, so dass zwischen der Vakuumfolie und der starren Basis 52 Luft abgesaugt wird, so dass der das Formwerkzeug 50 umgebende Luftdruck auf den Verbund 30 einwirkt.

Fig. 5 und 5A zeigen ein anderes Formwerkzeug 60. Dieses weist eine starre Basis 62 auf, auf der die Außenseite 32 des äußeren ersten Geleges 24 positioniert ist. Hieran schließen sich die eingeschlossenen, zweiten Gelege 28 an, auf die das innere erste Gelege 26 positioniert wird. Anschließend werden die Versteifungsbauteile 54 angebracht. Ein Andruckblock 64 dient dann dem Andrücken der Versteifungselemente 54 und des inneren ersten Geleges 26 insbesondere bei gleichzeitiger Erwärmung zur Konsolidierung des Bauteils.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Verfahren
- 4: Herstellen eines ersten flächigen Geleges
- 6: Herstellen zweiter flächiger Gelege
- 8: Bereitstellen von Versteifungselementen
- 10: Positionieren von zweiten Gelegen
- 12: Positionieren von Versteifungselementen
- 14: Konsolidieren
- 16: Herstellen äußeres erstes Gelege
- 18: Herstellen inneres erstes Gelege
- 20: Einbringen zweiter Gelege zwischen erster Gelege
- 22: Positionieren zweiter Gelege
- 24: äußeres erstes Gelege
- 26: inneres erstes Gelege
- 28: (eingeschlossenes) zweites Gelege
- 30: Verbund
- 32: Außenseite des äußeren ersten Geleges
- 34: Innenseite des äußeren ersten Geleges
- 36: Außenseite des inneren ersten Geleges
- 38: Innenseite des inneren ersten Geleges
- 40: zweite Gelege
- 42: Bauteil
- 44: Flugzeug
- 46: Fensterausschnitt
- 48: Türausschnitt
- 50: Formwerkzeug
- 52: starre Basis
- 54: Versteifungselemente
- 56: Teilbereiche des inneren ersten Geleges
- 58: Andruckblock
- 60: Formwerkzeug
- 62: starre Basis
- 64: Andruckblock

## Patentansprüche

1. Verfahren (2) zum Herstellen eines Bauteils (42), aufweisend die Schritte:
- Herstellen (4) einer geradzahligen Anzahl erster flächiger Gelege (24, 26) mit einem äußeren ersten Gelege (24) und einem inneren ersten Gelege (26) aus einem Faserverbundwerkstoff mit einer konstanten Dicke, einer Außenseite (32, 36) und einer Innenseite (34, 38), wobei die ersten Gelege (24, 26) eine Flächenerstreckung aufweisen, die die Flächenerstreckung des Bauteils (42) bestimmt,
wobei eine von dem inneren ersten Gelege (26) abgewandten Seite des äußeren ersten Geleges (24) als Außenseite zu bezeichnen ist, und die gegenüberliegende Seite als Innenseite zu bezeichnen ist, und
wobei eine zu dem äußeren ersten Gelege (24) gewandte Seite des inneren ersten Geleges (26) als Außenseite zu bezeichnen ist, und eine gegenüberliegende Seite als Innenseite zu bezeichnen ist;
- Herstellen (6) mehrerer zweiter flächiger Gelege (28, 40) aus dem Faserverbundwerkstoff, wobei die Flächenerstreckung der zweiten Gelege (28, 40) die des ersten flächigen Geleges (24, 26) unterschreitet;
- Positionieren (10) der zweiten Geleges (28, 40) an solchen Bereichen der Innenseite (34, 38) der ersten Gelege (24, 26), an denen eine lokale Dicke zur Erhöhung der lokalen Festigkeit erhöht werden muss, wobei das Positionieren der zweiten Gelege (28, 40) das Einbringen zumindest eines Teils des zweiten Geleges (28, 40) zwischen dem äußeren ersten Gelege (24) und dem inneren ersten Gelege (26) umfasst;
- Bereitstellen (8) mehrerer Versteifungselemente (54);
- Positionieren (12) des inneren ersten Geleges (24, 26) auf die Versteifungselemente (54), wobei das innere erste Gelege (24, 26) in einigen Teilbereichen (56) in seiner Kontur dreidimensional angepasst ist und sowohl die eingeschlossenen zweiten Gelege (28, 40) zwischen den Versteifungselementen (54), oder, unter, als auch zwischen den Versteifungselementen (54) angeordnet werden, so dass diese lokal zu einer Aufdickung führen, und anschließendes Anordnen des äußeren Geleges (24); und
- Konsolidieren (14) des Verbundes (30) aus den ersten Gelegen (24, 26), dem zweiten Gelege (28, 40) und den Versteifungselementen (54) zumindest unter Anwendung von Druck.

2. Verfahren (2) nach Anspruch 1,
wobei das innere erste Gelege (26) und das äußere erste Gelege (24) einen Lagenaufbau aufweisen, die zueinander symmetrisch sind.

3. Verfahren (2) nach einem der vorhergehenden Ansprüche,
wobei der Verbund (30) auf einem Formwerkzeug (50, 60) ausgebildet wird,
wobei der Verbund (30) anschließend zwischen dem Formwerkzeug (50, 60) und einem Andrückblock (58, 64) eingeschlossen wird, und
wobei der Verbund (30) durch Einwirkung eines mechanischen Drucks des Andrückblocks (58, 64) in Richtung des Formwerkzeugs (50, 60) konsolidiert wird.

4. Verfahren (2) nach einem der vorhergehenden Ansprüche,
wobei ein inneres erstes Gelege (26) dreidimensional in seiner Form angepasst wird, bevor der Verbund (30) auf einem Formwerkzeug (50, 60) ausgebildet wird.

5. Verfahren (2) nach einem der vorhergehenden Ansprüche,
wobei das Konsolidieren (14) mit einem Prozess durchgeführt wird, der aus einer Gruppe von Prozessen ausgewählt ist, die Gruppe aufweisend:
- Presskonsolidierung,
- Vakuumkonsolidierung, und
- Autoklavkonsolidierung.

6. Verfahren (2) nach einem der vorhergehenden Ansprüche,
wobei die ersten Gelege (24, 26) und die zweiten Gelege (28, 40) aus einem thermoplastischen, faserverstärkten Kunststoff hergestellt werden.

7. Verfahren (2) nach einem der vorhergehenden Ansprüche,
wobei das Bauteil (42) eine Rumpfschale, eine Flügelschale, eine Leitwerksschale oder ein anderes flächiges Bauteil (42) eines Flugzeugs (44) ist.

8. Bauteil (42), hergestellt nach einem Verfahren gemäß der Ansprüche 1 bis 7, aufweisend:
- eine geradzahlige Anzahl erster flächiger Gelege (24, 26) mit einem äußeren ersten Gelege (24) und einem inneren ersten Gelege (26) aus einem Faserverbundwerkstoff mit einer konstanten Dicke, einer Außenseite (32, 36) und einer Innenseite (34, 38), wobei die ersten Gelege (24, 26) eine Flächenerstreckung aufweisen, die die Flächenerstreckung des Bauteils (42) bestimmt;
- wobei eine von dem inneren ersten Gelege (26) abgewandten Seite des äußeren ersten Geleges (24) als Außenseite zu bezeichnen ist, und die gegenüberliegende Seite als Innenseite zu bezeichnen ist;
- wobei eine zu dem äußeren ersten Gelege (24) gewandte Seite des inneren ersten Geleges (26) als eine Außenseite zu bezeichnen ist, und eine gegenüberliegende Seite als eine Innenseite zu bezeichnen ist;
- mehrere zweite flächige Gelege (28, 40) aus dem Faserverbundwerkstoff, wobei die Flächenerstreckung des zweiten Geleges (28, 40) die des ersten flächigen Geleges (24, 26) unterschreitet, wobei die zweiten Gelege (28, 40) an solchen Bereichen der Innenseite (34, 38) der ersten Geleges (24, 26) angeordnet sind, an denen eine lokale Dicke zur Erhöhung der lokalen Festigkeit erhöht werden muss, und wobei zumindest ein Teil des zweiten Geleges zwischen dem äußeren ersten Gelege (24) und dem inneren ersten Gelege (26) angeordnet ist;
- wobei das Bauteil (42) ferner mehrere Versteifungselemente (54) aufweist, die auf der Innenseite (34, 38) des mindestens einen ersten Geleges (24, 26) angeordnet sind;
- wobei das innere erste Gelege (26) auf den Versteifungselementen (54) angeordnet ist, wobei das innere erste Gelege (26) in einigen Teilbereichen in seiner Kontur dreidimensional angepasst ist und sowohl das eingeschlossene zweiten Gelege zwischen den Versteifungselementen (54), oder, unter, als auch zwischen den Versteifungselementen (54) angeordnet ist, so dass diese lokal zu einer Aufdickung führen; und
- wobei der Verbund (30) aus dem mindestens einen ersten Gelege (24, 26) und dem zweiten Gelege (28, 40) und den Versteifungselementen (54) unter Anwendung von Druck konsolidiert ist.

## Claims

1. Method (2) of producing a component (42), having the steps of:
- producing (4) an even number of first planar scrims (24, 26) having an outer first scrim (24) and an inner first scrim (26) from a fibre composite material having a constant thickness, an outer face (32, 36) and an inner face (34, 38), where the first scrims (24, 26) have an areal extent that determines the areal extent of the component (42),
where a side of the outer first scrim (24) facing away from the inner first scrim (26) shall be referred to as the outer face, and the opposite side as the inner face, and
where a side of the inner first scrim (26) facing the outer first scrim (24) shall be referred to as the outer face, and an opposite side as the inner face;
- producing (6) a plurality of second planar scrims (28, 40) from the fibre composite material, where the areal extent of the second scrims (28, 40) is less than that of the first planar scrim (24, 26);
- positioning (10) the second scrims (28, 40) in those regions of the inner face (34, 38) of the first scrim (24, 26) where a local thickness has to be increased in order to increase local strength, where the positioning of the second scrims (28, 40) comprises the introducing of at least a portion of the second scrim (28, 40) between the outer first scrim (24) and the inner first scrim (26);
- providing (8) a plurality of reinforcing elements (54);
- positioning (12) the inner first scrim (24, 26) on the reinforcing elements (54), where the contour of the inner first scrim (24, 26) is three-dimensionally adapted in some regions (56) and the enclosed second scrims (28, 40) are disposed either between the reinforcing elements (54) or beneath and between the reinforcing elements (54) such that they locally lead to thickening, and subsequently arranging the outer scrim (24); and
- consolidating (14) the composite (30) composed of the first scrims (24, 26), the second scrim (28, 40) and the reinforcing elements (54) at least by applying pressure.

2. Method (2) according to Claim 1,
wherein the inner first scrim (26) and the outer first scrim (24) have a mutually symmetrical ply structure.

3. Method (2) according to either of the preceding claims,
wherein the composite (30) is formed on a forming tool (50, 60),
wherein the composite (30) is subsequently enclosed between the forming tool (50, 60) and a pressure block (58, 64), and
wherein the composite (30) is consolidated by the action of mechanical pressure by the pressure block (58, 64) in the direction of the forming tool (50, 60).

4. Method (2) according to any of the preceding claims, wherein the shape of an inner first scrim (26) is adapted three-dimensionally before the composite (30) is formed on a forming tool (50, 60).

5. Method (2) according to any of the preceding claims, wherein the consolidating (14) is performed by a process selected from a group of processes comprising:
- press consolidation,
- vacuum consolidation, and
- autoclave consolidation.

6. Method (2) according to any of the preceding claims, wherein the first scrims (24, 26) and the second scrims (28, 40) are produced from a fibre-reinforced thermoplastic.

7. Method (2) according to any of the preceding claims, wherein the component (42) is a fuselage shell, a wing shell, a tail shell or another planar component (42) of an aircraft (44).

8. Component (42) produced by a method according to Claims 1 to 7, comprising:
- an even number of first planar scrims (24, 26) having an outer first scrim (24) and an inner first scrim (26) produced from a fibre composite material having a constant thickness, an outer face (32, 36) and an inner face (34, 38), where the first scrims (24, 26) have an areal extent that determines the areal extent of the component (42);
- where a side of the outer first scrim (24) facing away from the inner first scrim (26) shall be referred to as the outer face, and the opposite side as the inner face;
- where a side of the inner first scrim (26) facing the outer first scrim (24) shall be referred to as an outer face, and an opposite side as an inner face;
- a plurality of second planar scrims (28, 40) produced from the fibre composite material, where the areal extent of the second scrim (28, 40) is less than that of the first planar scrim (24, 26), wherein the second scrims (28, 40)
are disposed in those regions of the inner face (34, 38) of the first scrim (24, 26) where a local thickness has to be increased in order to increase local strength, and where at least a portion of the second scrim is disposed between the outer first scrim (24) and the inner first scrim (26);
- wherein the component (42) further comprises a plurality of reinforcing elements (54) disposed on the inner face (34, 38) of the at least one first scrim (24, 26);
- wherein the inner first scrim (26) is disposed on the reinforcing elements (54), where the contour of the inner first scrim (26) is three-dimensionally adapted in some regions and the enclosed second scrim is disposed either between the reinforcing elements (54) or beneath and between the reinforcing elements (54) such that they locally lead to thickening; and
- wherein the composite (30) composed of the at least one first scrim (24, 26) and the second scrim (28, 40) and the reinforcing elements (54) is consolidated by applying pressure.

## Revendications

1. Procédé (2) de fabrication d'un composant (42), présentant les étapes suivantes :
- la fabrication (4) d'un nombre pair de premières nappes planes (24, 26) avec une première nappe extérieure (24) et une première nappe intérieure (26) en un matériau composite fibreux d'une épaisseur constante, un côté extérieur (32, 36) et un côté intérieur (34, 38), les premières nappes (24, 26) présentant une extension de surface qui détermine l'extension de surface du composant (42),
un côté de la première nappe extérieure (24) détourné de la première nappe intérieure (26) étant désigné comme côté extérieur et le côté opposé étant désigné comme côté intérieur, et
un côté de la première nappe intérieure (26) tourné vers la première nappe extérieure (24) étant désigné comme côté extérieur et un côté opposé étant désigné comme côté intérieur ;
- la fabrication (6) de plusieurs deuxièmes nappes planes (28, 40) à partir du matériau composite fibreux, l'extension de surface des deuxièmes nappes (28, 40) étant inférieure à celle de la première nappe plane (24, 26) ;
- le positionnement (10) des deuxièmes nappes (28, 40) sur les zones du côté intérieur (34, 38) des premières nappes (24, 26) où une épaisseur locale doit être augmentée pour augmenter la résistance locale, le positionnement des deux nappes (28, 40) comprenant l'introduction d'au moins une partie de la deuxième nappe (28, 40) entre la première nappe extérieure (24) et la première nappe intérieure (26) ;
- la fourniture (8) de plusieurs éléments de renforcement (54) ;
- le positionnement (12) de la première nappe intérieure (24, 26) sur les éléments de renforcement (54), la première nappe intérieure (24, 26) étant adaptée en trois dimensions dans certaines zones partielles (56) de son contour et les deuxièmes nappes (28, 40) enfermées étant agencées aussi bien entre les éléments de renforcement (54) ou sous, qu'entre les éléments de renforcement (54), de telle sorte que celles-ci conduisent localement à un épaississement, puis l'agencement de la nappe extérieure (24) ; et
- la consolidation (14) du composite (30) des premières nappes (24, 26), de la deuxième nappe (28, 40) et des éléments de renforcement (54), au moins par application de pression.

2. Procédé (2) selon la revendication 1,
dans lequel la première nappe intérieure (26) et la première nappe extérieure (24) présentent une structure de couches symétriques l'une par rapport à l'autre.

3. Procédé (2) selon l'une quelconque des revendications précédentes,
dans lequel le composite (30) est réalisé sur un outil de moulage (50, 60),
dans lequel le composite (30) est ensuite enfermé entre l'outil de moulage (50, 60) et un bloc de pression (58, 64), et
dans lequel le composite (30) est consolidé sous l'effet d'une pression mécanique du bloc de pression (58, 64) en direction de l'outil de moulage (50, 60).

4. Procédé (2) selon l'une quelconque des revendications précédentes,
dans lequel une première nappe intérieure (26) est adaptée en trois dimensions avant que le composite (30) ne soit réalisé sur un outil de moulage (50, 60).

5. Procédé (2) selon l'une quelconque des revendications précédentes,
dans lequel la consolidation (14) est effectuée à l'aide d'un processus sélectionné parmi un groupe de processus, le groupe présentant :
- la consolidation par pression,
- la consolidation sous vide, et
- la consolidation en autoclave.

6. Procédé (2) selon l'une quelconque des revendications précédentes,
dans lequel les premières nappes (24, 26) et les deuxièmes nappes (28, 40) sont fabriquées à partir d'une matière thermoplastique renforcée de fibres.

7. Procédé (2) selon l'une quelconque des revendications précédentes,
dans lequel le composant (42) est une coque de fuselage, une coque d'aile, une coque d'empennage ou un autre composant plat (42) d'un aéronef (44).

8. Composant (42), fabriqué par un procédé selon les revendications 1 à 7, présentant :
- un nombre pair de premières nappes planes (24, 26) avec une première nappe extérieure (24) et une première nappe intérieure (26) en un matériau composite fibreux d'une épaisseur constante, un côté extérieur (32, 36) et un côté intérieur (34, 38), les premières nappes (24, 26) présentant une extension de surface qui détermine l'extension de surface du composant (42) ;
- un côté de la première nappe extérieure (24) détourné de la première nappe intérieure (26) étant désigné comme côté extérieur et le côté opposé étant désigné comme côté intérieur ;
- un côté de la première nappe intérieure (26) tourné vers la première nappe extérieure (24) étant désigné comme un côté extérieur et un côté opposé étant désigné comme un côté intérieur ;
- plusieurs deuxièmes nappes planes (28, 40) à partir du matériau composite fibreux, l'extension de surface des deuxièmes nappes (28, 40) étant inférieure à celle de la première nappe plane (24, 26), les deuxièmes nappes (28, 40)
étant agencées sur les zones du côté intérieur (34, 38) des premières nappes (24, 26) où une épaisseur locale doit être augmentée pour augmenter la résistance locale, et au moins une partie de la deuxième nappe étant agencée entre la première nappe extérieure (24) et la première nappe intérieure (26) ;
- le composant (42) présentant en outre plusieurs éléments de renforcement (54) agencés sur le côté intérieur (34, 38) de l'au moins une première nappe (24, 26) ;
- la première nappe intérieure (26) étant agencée sur les éléments de renforcement (54), la première nappe intérieure (26) étant adaptée en trois dimensions dans certaines zones partielles de son contour et la deuxième nappe enfermée étant agencée aussi bien entre les éléments de renforcement (54) ou sous, qu'entre les éléments de renforcement (54), de telle sorte que celles-ci conduisent localement à un épaississement ; et
- le composite (30) étant consolidé en utilisant une pression à partir d'au moins une première nappe (24, 26) et de la deuxième nappe (28, 40) et des éléments de renforcement (54).
